# EUROPEAN PATENT APPLICATION

(11) **EP 2 518 794 A1**
(43) Date of publication of application: **31.10.2012**
(21) Application number: 11164161.9
(22) Date of filing: 28.04.2011
(51) Int. Cl.: H01M 2/30, H01M 2/26, H01M 2/10, H01M 10/0525, H01M 10/0585, H01M 2/34

(54) **High-power and large-capacity lithium battery of electric bus**

(71) Applicant: Xu, LianKuan, Tinghu District Yanchen City Jiangsu 224000 (CN)
(72) Inventor: XU, LianKuan, 224000, JIANGSU (CN)
(74) Representative: Larcher, Dominique

(57) **Abstract**

A high-power and large-capacity lithium battery for electric bus is provided. The battery stack comprises a thermal protection device (9) with dual terminals and is made from certain materials in a manner such that it avoids a mutual contact between upper and lower pole pieces to cause a short circuit, resulting from bounce of pole pieces caused by bus vibration or external mechanical shock etc.; the stress of external terminal is evenly dispersed, thus the battery is safe, steady, electrolyte resistant, anti-aging and advantageous to heat dissipation with reduced failure rate and high efficiency during movement of bus, so as to solve the connection problem resulted from series-parallel connection of single cells to constitute the battery. The batteries have small size, large capacity and high power, each having a safety protection unit, simple to make and convenient.

## Description

### TECHNICAL FIELD

This invention relates to a lithium battery of electric bus, particularly a high-power and large-capacity lithium battery of electric bus.

### BACKGROUND

Electric vehicles such as electric cars, electric trains or electric buses may utilize one or more electric motors for propulsion. Energy required by such electric motors may be stored in one or more batteries located on the vehicles. Such batteries may need to be configured to sustain various operating conditions including severe weather conditions, extreme temperatures, or the like. In addition, the protective shells of such batteries may become deformed and swell if the batteries are utilized for an extended period of time, which may cause various quality problems. For example, the surface contact among pole pieces will become point contact or depart each other so as to bring a great deal of unstable factors.

At present, battery cell stacks are produced by way of lamination method in general, in which pole pieces of lithium battery are large and thin, and the lamination processing will be completed through cooperation of two persons. But if a lamination stacking machine is utilized, many aspects do not permit under the domestic conditions of fumbling and trying besides a raised cost, so that the cells produced at this situation will be incompact with a low efficiency. If a vibration or mechanical shock resulted from external force occurs to bus, it is easy to cause bounce of pole pieces such that upper and lower pole pieces contact each other, thus a short circuit occurs and the battery will be burnt out.

### SUMMARY

The purpose of the present publication is to provide a high-power and large-capacity lithium battery of electric bus, comprising a positive pole piece, is quadrate, rectangular, oval or annular, where two or more equant-shaped aluminum pole lugs are provided, two sides of said positive piece are respectively coated with films and leveled to form positive piece aluminum clad; and a negative pole piece, is quadrate, rectangular, oval or annular, where two or more equant-shaped copper pole lugs are provided; and said negative piece has a same shape, an equal or bigger size with/than the positive piece, two sides of said negative piece are respectively coated with films and leveled to form negative piece copper clad.

The lugs of said positive piece aluminum clad and said negative piece are overlapped at the same direction by way of interlacing to constitute a negative copper piece of equidirectional aluminum clad. Alternatively, the lugs of said positive piece aluminum clad and said negative piece are overlapped oppositely by way of interlacing to constitute a negative copper piece of opposite aluminum clad.

The lugs of said negative piece copper clad and said positive piece are overlapped at the same direction by way of interlacing to constitute a positive aluminum piece of equidirectional copper clad. Alternatively, the lugs of said negative piece copper clad and said positive piece are overlapped oppositely by way of interlacing to constitute a positive aluminum piece of opposite copper clad.

The negative copper piece stack of equidirectional or opposite aluminum clad and said positive aluminum piece stack of equidirectional or opposite copper clad constitute a cell stack. One end at the top of equidirectional shell is provided with two posts that are respectively aluminum and copper posts, and said opposite shell is also provided with two posts that are respectively aluminum and copper posts; assembling the copper pole lug and aluminum pole lug corresponding to copper post and aluminum post at the top of said shell. At the bottom ends of both said copper and aluminum posts having a thermal protection units; and installing reinforcing ribs at the surface of said shell.

The present invention has following beneficial effects: the cell stacks are produced in the form of intermediate diaphragm by said positive and negative pole pieces and through an automatic production line, so as to save the hand labor during the packing process of battery, making the batteries more consistent and avoiding the influences on battery quality caused by human factors. The battery stack comprises a thermal protection device with dual terminals and is made from certain materials in a manner such that it avoids a mutual contact between upper and lower pole pieces to cause a short circuit, resulting from bounce of pole pieces caused by bus vibration or external mechanical shock etc.; the stress of external terminal is evenly dispersed, thus the battery is safe, steady, electrolyte resistant, anti-aging and advantageous to heat dissipation with reduced failure rate and high efficiency during movement of bus, so as to solve the connection problem resulted from series-parallel connection of single cells to constitute the battery. The batteries have small size, large capacity and high power, each having a safety protection unit, simple to make and convenient. Also it has a high rate discharge, improved capacity of battery, and dynamic safety, reliability, stability and cycle life.

It is to be understood that both the foregoing general description and the following detailed description are exemplary only and are not necessarily restrictive of the disclosure as claimed. The accompanying drawings, which are incorporated in and constitute a part of the specification, illustrate an embodiment of the disclosure and together with the general description, serve to explain the principle of the disclosure.

### BRIEF DESCRIPTION OF THE DRAWINGS

The numerous advantages of the present invention may be better understood by those skilled in the art by reference to the accompanying figures in which:
FIG. 1 is a structure diagram for positive aluminum piece of said high-power and large-capacity lithium battery of electric bus;
FIG. 2 is a structure diagram for negative copper piece of said high-power and large-capacity lithium battery of electric bus;
FIG. 3 is a structure diagram for positive piece aluminum clad of said high-power and large-capacity lithium battery of electric bus;
FIG. 4 is a structure diagram for negative piece copper clad of said high-power and large-capacity lithium battery of electric bus;
FIG. 5 is a structure diagram for positive aluminum piece stack of equidirectional copper clad of said high-power and large-capacity lithium battery of electric bus;
FIG. 6 is a structure diagram for negative copper piece stack of equidirectional aluminum clad of said high-power and large-capacity lithium battery of electric bus;
FIG. 7 is a structure diagram for positive aluminum piece stack of opposite copper clad of said high-power and large-capacity lithium battery of electric bus;
FIG. 8 is a structure diagram for negative copper piece stack of opposite aluminum clad of said high-power and large-capacity lithium battery of electric bus;
FIG. 9 is a sectional view for equidirectional single cell of said high-power and large-capacity lithium battery of electric bus;
FIG. 10 is a stereogram for equidirectional single cell of said high-power and large-capacity lithium battery of electric bus;
FIG. 11 is a sectional view for opposite single cell of said high-power and large-capacity lithium battery of electric bus; and
FIG. 12 is a stereogram for opposite single cell of said high-power and large-capacity lithium battery of electric bus.

### DETAILED DESCRIPTION

Reference will now be made in detail to the subject matter disclosed, which is illustrated in the accompanying drawings.

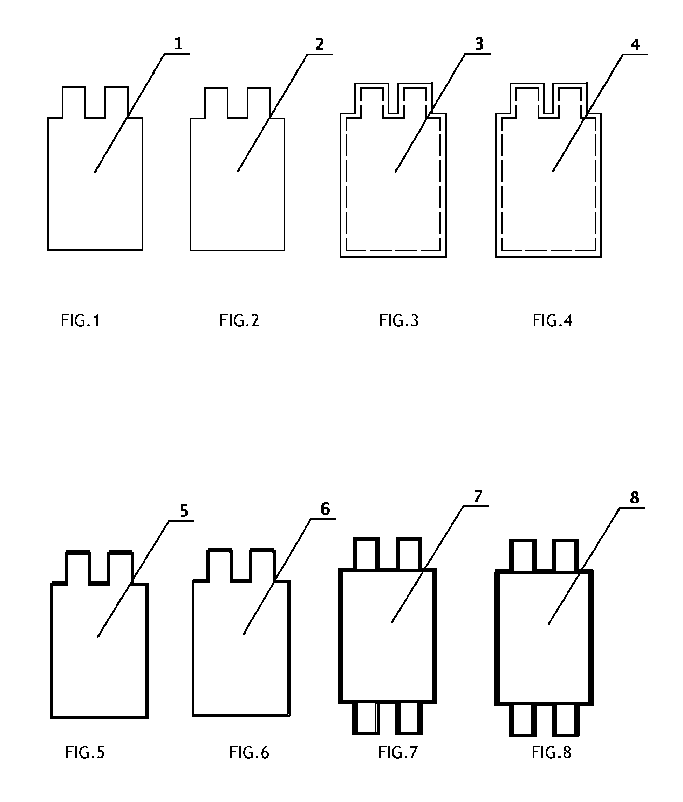

In the figures 1, 2, 3 and 4, the positive aluminum pole piece 1, i.e. positive pole piece, is rectangular and made by the following steps: firstly mixing the quality material aluminum foil, active substances (e.g. LiFeP04, LiNiCO2, LiMn2O4, LiMnNiCoO2 and Li3V2(PO4)3), such new anode materials of lithium-embedded oxide as Li2MSiO4 (M indicates transition metals, e.g. Co, Ni, Fe, Mn) represented by Li2FeSiO4 with conductive agent, then making glue solution with caking agent to be mixed into above mixture according to process requirements by mingling so as to form a sizing agent, and finally applying it on aluminum foil, in which two or more equant-shaped aluminum pole lugs are provided; the negative copper pole piece 2 is rectangular and made by the following steps: firstly mixing the quality material copper foil and negative active substances (e.g. alloy material, tin-based amorphous composite oxide, carbon-graphite materials, zero-strain material LiTi5O12) with conductive agent, then making glue solution with caking agent to be mixed into above mixture according to process requirements by mingling so as to form a sizing agent, and finally applying it on copper foil, in which two or more equant-shaped aluminum pole lugs are provided. The negative piece has a same shape, an equal or bigger size with/than the positive piece.

Two sides of positive and negative pieces are respectively coated with films and leveled to form positive piece aluminum clad 3 or negative piece copper clad 4. Said positive and negative pole pieces are provided in the form of intermediate diaphragm; said positive or negative pole piece is placed between two layers of diaphragms, of which surfaces are coated with viscose glue, heated by a heating zone so that the diaphragms and the surfaces of said pole pieces are firmly glued together to form pole piece clad, thus the interfaces between diaphragms and pieces keep stable; a production line is utilized to save the hand labor during the packing process of battery and ensure a safety of facilities. Also it can provide a process basis for assembling cells from hand operation to automatic production line, thereby avoiding the influences on quality of battery resulted from human factors.

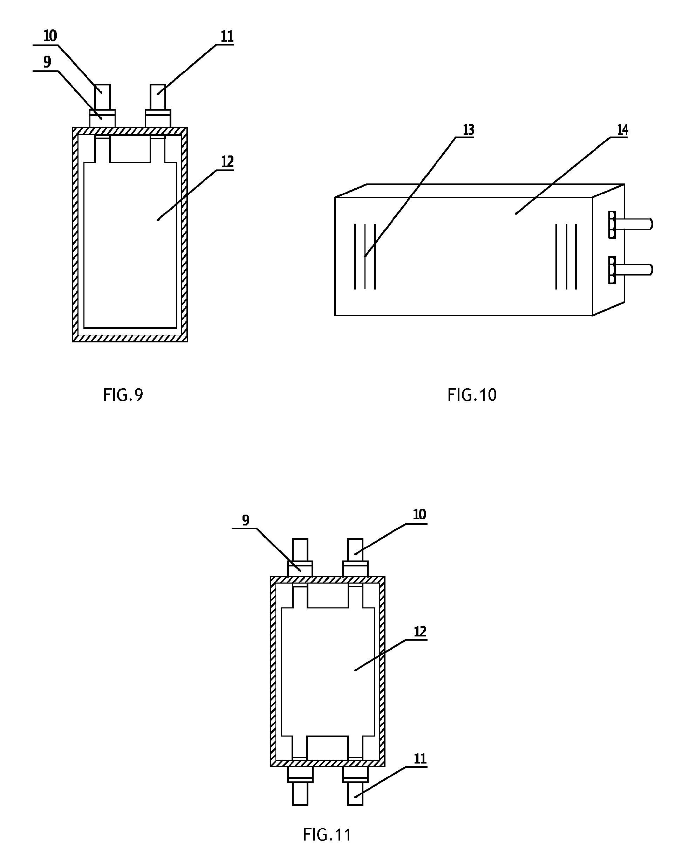

In the embodiments of figures 5, 6, 9 and 10, it comprises: by way of interlacing, stacking the lugs of said positive piece aluminum clad 3 and negative piece at the same direction to form a negative copper piece stack 6 of equidirectional aluminum clad; by way of interlacing, stacking the lugs of said negative piece copper clad 4 and positive piece at the same direction to form a positive aluminum piece stack 5 of equidirectional copper clad, wherein said negative copper piece stack 6 of equidirectional aluminum clad and said positive aluminum piece stack 5 of equidirectional copper clad constitute a cell stack 12; packing said cell stack 12 into a cuboid shell, wherein one end at the top of equidirectional shell is provided with two posts that are respectively aluminum and copper posts, and said opposite shell is also provided with two posts that are respectively aluminum and copper posts; assembling the copper pole lug and aluminum pole lug of said cell stack 12 corresponding to copper post and aluminum post at the top of said shell; providing thermal protection units 9 at the bottom ends of said copper and aluminum posts; and installing reinforcing ribs 13 at the surface of said shell.

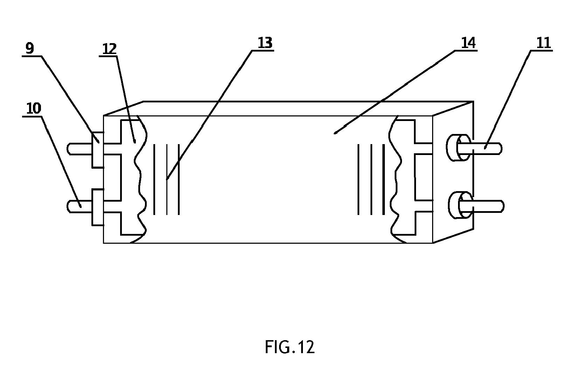

In the embodiments of figures 7, 8, 11 and 12, it comprises: by way of interlacing, stacking the lugs of said positive piece aluminum clad 3 and negative piece oppositely to form a negative copper piece stack 8 of opposite aluminum clad; by way of interlacing, stacking the lugs of said negative piece copper clad 4 and positive piece oppositely to form a positive aluminum piece stack 7 of opposite copper clad, wherein said negative copper piece stack 8 of opposite aluminum clad and said positive aluminum piece stack 7 of opposite copper clad constitute a cell stack 12; packing said cell stack 12 into a cuboid shell, wherein one end at the top of equidirectional shell is provided with two posts that are respectively aluminum and copper posts, and said opposite shell is also provided with two posts that are respectively aluminum and copper posts; assembling the copper pole lug and aluminum pole lug of said cell stack 12 corresponding to copper post and aluminum post at the top of said shell; providing thermal protection units 9 at the bottom ends of said copper and aluminum posts; and installing reinforcing ribs 13 at the surface of said shell.

Said negative copper piece stack (6, 8) of equidirectional or opposite aluminum clad and said positive aluminum piece stack (5, 7) of equidirectional or opposite copper clad are overlapped each other by way of interlacing to constitute a cell stack 12 inside said lithium battery. One end of said externally exposed copper terminal 11 that the external copper terminal 11 is plated with nickel, and the other end, namely internal end, of said copper terminal 11 is held in the battery and connected to the protruded pole lug of said copper pole piece; the protruded pole lug of said aluminum pole piece is connected to the internal aluminum terminal 10 kept inside the battery.

The pole post or cover plate is provided with thermal protection unit 9 to prevent a mutual contact between upper and lower pole pieces to cause a short circuit, resulting from bounce of pole pieces caused by bus vibration or external mechanical shock etc.; the stress of external terminal is evenly dispersed, so it can not only achieve the performance of rate discharge of battery, but is beneficial to relieving the inner heat of battery and to heat dissipation, so as to enhance the safety. The shell of said lithium battery shell is made from metallic insulation materials and provided with a plurality of reinforcing ribs 13 to strengthen the shell without any distortion. The aluminum alloy material is particularly formulated, weldable with laser, electrolyte resistant, deformation resistant and leakproof. Due to the copper and aluminum material with excellent performance of heat dissipation, heat conduction of the battery is better than plastic shell.

The positive and negative terminals of said lithium battery are multi-stage dual terminals which are respectively provided on two ends of said battery. A plurality of internal copper terminals 11 are connected to a plurality of copper pole lugs of said cell stack 12, and the external copper terminals 11 at the other end stretch out of battery to be connected to battery pack; a plurality of internal aluminum terminals 10 are connected to a plurality of aluminum pole lugs of said cell stack 12, and the external aluminum terminals 10 at the other end stretch out of battery to be connected to battery pack. Each battery shall be provided with a thermal protection unit 9, and a thermal control function is provided for the control system of battery to protect and monitor each of said batteries, so as to solve the assembling problem that lithium battery pack of bus is composed of single cells through series-parallel connection. A high rate discharge can be realized for batteries, thereby meeting the demands of motor. Also it is advantaged in a dynamic large capacity, dynamic safety, reliability, stability and cycle life and so on.

The technical principle for said high-power and large-capacity lithium battery of electric bus is in that: said positive pole piece is provided in the form of intermediate diaphragm; said positive or negative pole piece is placed between two layers of diaphragms, of which surfaces are coated with viscose glue, heated by a heating zone so that the diaphragms and the surfaces of said pole pieces are firmly glued together to form pole piece clad, thus the interfaces between diaphragms and pieces keep stable; a production line is utilized to save the hand labor during the packing process of battery and ensure a safety of facilities, also it can provide a process basis for assembling cells from hand operation to automatic production line, thereby avoiding the influences on quality of battery resulted from human factors. Said negative copper piece stack of equidirectional or opposite aluminum clad and said positive aluminum piece stack of equidirectional or opposite copper clad are overlapped each other by way of interlacing to constitute a cell stack inside said lithium battery. One end of said externally exposed copper terminal that the external copper terminal is plated with nickel, and the other end, namely internal end, of said copper terminal is held in the battery and connected to the protruded pole lug of said copper pole piece; the protruded pole lug of said aluminum pole piece is connected to the internal aluminum terminal kept inside the battery.

The pole post or cover plate is provided with thermal protection unit to prevent a mutual contact between upper and lower pole pieces to cause a short circuit, resulting from bounce of pole pieces caused by bus vibration or external mechanical shock etc.; the stress of external terminal is evenly dispersed, so it can not only achieve the performance of rate discharge of battery, but is beneficial to relieving the inner heat of battery and to heat dissipation, so as to enhance the safety. The shell of said lithium battery shell is made from metallic insulation materials and provided with a plurality of reinforcing ribs to strengthen the shell without any distortion. The aluminum alloy material is particularly formulated, weldable with laser, electrolyte resistant, deformation resistant and leakproof. Due to the copper and aluminum material with excellent performance of heat dissipation, heat conduction of the battery is better than plastic shell. The positive and negative terminals of said lithium battery are multi-stage dual terminals which are respectively provided on two ends of said battery. A plurality of internal copper terminals are connected to a plurality of copper pole lugs of said cell stack, and the external copper terminals at the other end stretch out of battery to be connected to battery pack; a plurality of internal aluminum terminals are connected to a plurality of aluminum pole lugs of said cell stack, and the external aluminum terminals at the other end stretch out of battery to be connected to battery pack. Each battery shall be provided with a thermal protection unit, and a thermal control function is provided for the control system of battery to protect and monitor each of said batteries, so as to solve the assembling problem that lithium battery pack of bus is composed of single cells through series-parallel connection. A high rate discharge can be realized for batteries, thereby meeting the demands of motor. Also it is advantaged in a dynamic large capacity, dynamic safety, reliability, stability and cycle life and so on.

It is believed that the high-power and large-capacity lithium battery of electric bus of the present invention and many of its attendant advantages will be understood by the foregoing description, and it will be apparent that various changes may be made in the form, construction and arrangement of the components without departing from the disclosed subject matter or without sacrificing all of its material advantages. The form described is merely explanatory, and it is the intention of the following claims to encompass and include such changes.

## Claims

1. A high-power and large-capacity lithium battery of electric bus, comprising:
a positive pole piece (1), the positive pole piece having one of a quadrate shape, a rectangular shape,
an oval shape or an annular shape, the positive pole piece defining at least two equant-shaped aluminum pole lugs, where at least two sides of said positive piece are respectively coated with films and are leveled to form a positive piece aluminum clad (3); and
a negative pole piece (2), the negative pole piece having one of a quadrate shape, a rectangular shape, an oval shape or an annular shape, the negative pole piece defining at least two equant-shaped copper pole lugs , where at least two sides of said negative piece are respectively coated with films and are leveled to form a negative piece copper clad (4);
wherein said negative piece is physically equivalent to or larger than said positive piece.

2. The high-power and large-capacity lithium battery of electric bus according to claim 1, wherein the lugs of said positive piece aluminum clad (3) and said negative piece are overlapped at the same direction by way of interlacing to constitute a negative copper piece (6) of equidirectional aluminum clad.

3. The high-power and large-capacity lithium battery of electric bus according to claim 1, wherein the lugs of said positive piece aluminum clad (3) and said negative piece are overlapped oppositely by way of interlacing to constitute a negative copper piece (8) of opposite aluminum clad.

4. The high-power and large-capacity lithium battery of electric bus according to claim 1, wherein the lugs of said negative piece copper clad (4) and said positive piece are overlapped at the same direction by way of interlacing to constitute a positive aluminum piece (5) of equidirectional copper clad.

5. The high-power and large-capacity lithium battery of electric bus according to claim 1, wherein the lugs of said negative piece copper clad (4) and said positive piece are overlapped oppositely by way of interlacing to constitute a positive aluminum piece (7) of opposite copper clad.

6. The high-power and large-capacity lithium battery of electric bus according to claim 1, wherein said negative copper piece stack (6,8) of equidirectional or opposite aluminum clad and said positive aluminum piece stack (5,7) of equidirectional or opposite copper clad constitute a cell stack (12).

7. The high-power and large-capacity lithium battery of electric bus according to claim 6, wherein said cell stacks (12) are packed into a cuboid shell, one end at the top of equidirectional shell is provided with two posts that are respectively aluminum (10) and copper (11) posts, and said opposite shell is also provided with two posts that are respectively aluminum (10) and copper (11) posts; and wherein the copper pole lug and aluminum pole lug are assembled corresponding to copper post and aluminum post at the top of said shell.

8. The high-power and large-capacity lithium battery of electric bus according to claim 7, wherein bottom ends of both said copper (11) and aluminum (10) posts comprise thermal protection units (9), and said shell comprises reinforcing surface ribs (13).
